# EUROPÄISCHE PATENTSCHRIFT

(11) **EP 0 667 830 B1**
(45) Veröffentlichungstag und Bekanntmachung des Hinweises auf die Patenterteilung: **05.06.1996**
(21) Anmeldenummer: 94900142.4
(22) Anmeldetag: 12.11.1993
(51) Int. Cl.: B65G 17/32

(54) **FÖRDER-BANDKETTE**
CONVEYOR CHAIN
CHAINE DE TRANSPORT

(30) Priorität: 13.11.1992 DE 9215323 U
(43) Veröffentlichungstag der Anmeldung: 23.08.1995
(73) Patentinhaber: Bizerba GmbH & Co. KG, D-72336 Balingen (DE)
(72) Erfinder: KRAUT, Ingolf, D-72336 Balingen (DE)
(74) Vertreter: Hoeger, Stellrecht & Partner
(86) Internationale Anmeldenummer: EP9303181
(87) Internationale Veröffentlichungsnummer: WO9411279

(56) Entgegenhaltungen:
- DE-A- 3 324 178
- DE-C- 177 236
- DE-U- 9 103 801
- FR-A- 406 793
- FR-A- 515 628
- FR-A- 564 159
- US-A- 2 070 362

## Beschreibung

Die Erfindung betrifft eine Förder-Bandkette für die Fördervorrichtung einer Scheibenablegevorrichtung an einer Aufschnitt-Schneidemaschine für Wurst, Fleisch, Käse oder dgl. mit Kettengliedern, die samt senkrecht von der Bandkette abstehenden, die Schneidgut-Scheiben aufnehmenden Spitzen einstückig aus Draht geformt sind, wobei die Kettenglieder jeweils ein symmetrisch zur Kettenlängsrichtung ausgebildetes,U-förmiges Mittelteil mit einem Steg und zwei sich auf gegenüberliegenden Seiten des Steges daran anschließenden Schenkeln aufweisen, welchletztere an ihren freien Enden angeformte Oesen tragen.

Derartige halb- oder vollautomatische Schneidemaschinen sind im wesentlichen mit einem rotierenden Kreismesser, einem das Schneidgut aufnehmenden, hin- und herbeweglichen Zuführschlitten, einer Ablegevorrichtung für die abgeschnittenen Scheiben, bestehend aus einer Umlenk-, einer Förder- und einer Abschläger-Vorrichtung, sowie mit einem beweglichen Ablegetisch versehen (vgl. z.B. DE-AS 19 61 069 und DE-PS 17 57 766).

Die vom Kreismesser abgeschnittenen Schneidgut-Scheiben werden mittels der Umlenkeinrichtung auf die Fördervorrichtung übernommen, die mit mehreren zueinander parallelen, in horizontaler Richtung in einem Kettenrahmen um zwei Umlenkachsen umlaufenden, gespannten, mit nadelförmigen Spitzen bestückten bandartigen Förder-Ketten versehen ist.

Die Fördervorrichtung bringt die Schneidgut-Scheiben in einer gesteuerten Bewegung von der Übernahme- in die Ablegeposition und zieht sie mit Hilfe einer in Ruhestellung zwischen die Förder-Ketten eintauchenden, rechenartigen Abschläger-Vorrichtung in einer kreisförmigen, gestoppten Bewegung von den Spitzen ab und legt sie auf dem Ablegetisch in Reihe oder flächig geschuppt oder gestapelt ab (vgl. z.B. DE-GM 77 04 685 und DE-PS 27 07 534).

Förder-Ketten der geschilderten Art sind an sich bekannt. Sie bestehen aus einer bestimmten Anzahl aus nichtrostendem Draht gebogenen und durch gebogene Ösen aneinandergereihten Kettengliedern, wobei diese in bestimmten Abständen mit senkrecht zur Förderrichtung abstehenden Mitnehmer-Spitzen versehen sind, auf die das abgeschnittene, zu fördernde Schneidgut aufgespießt und zur Ablegestelle mitgenommen wird.

Bei langjährig in der Praxis verwendeten Förderketten werden die Mitnehmer-Spitzen senkrecht zur Förderrichtung mittig auf die geradlinigen Stege der einzelnen Kettenglieder aufgeschweißt.

Diese Ausführung hat jedoch den Nachteil, daß der Schweißvorgang kompliziert ist, eine chemische Oberflächen-Nachbehandlung erforderlich macht und zu thermischen Spannungen und unerwünschten Gefügeveränderungen an der Schweißstelle führen kann, so daß unter Dauerbeanspruchung sich einzelne Mitnehmerspitzen lösen oder abbrechen und im Schneidgut verbleiben können, was zu Verletzungen führen kann.

Um diese Nachteile zu vermeiden, wurde inzwischen in Weiterentwicklung dieser Ausführungsform die Verwendung von ansich bekannten einstückigen Kettengliedern vorgesehen, die aus einem einzigen Stück Draht geformt sind. Ein diesbezüglich bisher bekannt gewordener Lösungsvorschlag (vgl. z.B. DE-GM 91 03 801.4) hat jedoch den Nachteil, daß er fertigungs- bzw. biegetechnisch problematisch, d.h. nur mit hohem Werkzeug-Aufwand zu realisieren wäre und auch anwendungstechnisch bislang zu keinem in der Praxis akzeptablen Ergebnis geführt hat.

Der Erfindung liegt die Aufgabe zugrunde, die geschilderten Nachteile zu vermeiden und fertigungs- und anwendungstechnisch befriedigende, insbesondere das Schneidgut schonende, kostengünstig herstellbare Kettenglieder bzw. Förder-Bandketten vorzuschlagen.

Diese Aufgabe wird mit den konstruktiven Merkmalen des kennzeichnenden Teils des Anspruchs 1 gelöst. Weitere Ausführungsbeispiele und Ausgestaltungen sind in den Unteransprüchen festgelegt.

Die hierbei erzielbaren Vorteile werden des besseren Verständnisses wegen am Schluß der Beschreibung der Ausführungsbeispiele erläutert.

Ein Ausführungsbeispiel der Erfindung ist in der Zeichnung dargestellt und im folgenden näher beschrieben. Es zeigen
Fig. 1 eine Draufsicht auf die ausschnittsweise dargestellte Förder-Bandkette mit 3 Kettengliedern,
Fig. 2 eine Seitenansicht der Förder-Bandkette gemäß Fig. 1,
Fig. 3 die Spitze eines Kettengliedes der Förder-Bandkette in Förderrichtung F gesehen,
Fig. 4 die Draufsicht einer Variante der Förder-Bandkette,
Fig. 5 eine Seitenansicht der Förder-Bandkette gemäß Fig.4,
Fig. 6 eine Draufsicht auf das Endglied der Förder-Bandkette,
Fig. 7 die Seitenansicht der Einhänge-Oese des Endgliedes gemäß Fig. 6.

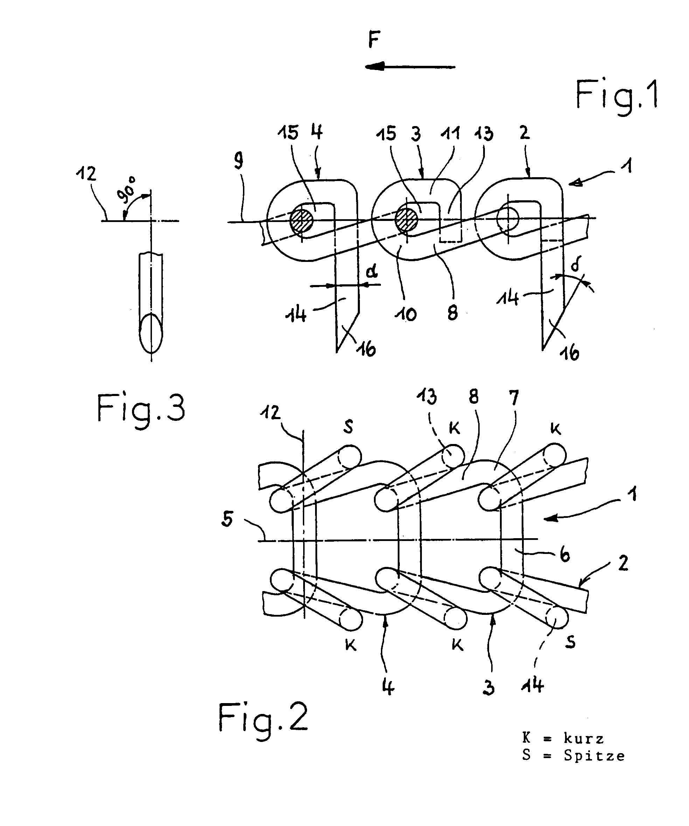

Die in Fig. 1 und 2 in Drauf- und Seitenansicht ausschnittsweise dargestellte Förder-Bandkette 1 besteht aus den Kettengliedern 2, 3 und 4, die einstückig aus nichtrostendem Stahldraht gebogen sind, wobei die aus den einzelnen Kettengliedern bestehende Bandkette 1 in einem sog. Folgewerkzeug in einem unterteilten Arbeitsgang hergestellt wird.

Die Kettenglieder 2, 3 oder 4 setzen sich - symmetrisch zu einer zur Förderrichtung F parallelen Mittelachse 5 - zusammen aus einem U-förmigen Mittelteil, bestehend aus einem geraden Mittelsteg 6 mit jeweils über ein Bogenstück 7 nach innen konisch angestellten, geraden Schenkeln 8, wobei die lichte Weite zwischen den Schenkeln 8 2,3 bis 2,7, vorzugsweise 2,5x Drahtdurchmesser d beträgt und der Innenradius des Bogenstücks 7 0,6 bis 0,8xd, vorzugsweise 0,75xd, ist.

An die beiden Schenkel 8 ist jeweils eine Oese 15 angebogen, die aus einem etwa halbkreisförmigen Bogenstück 10 mit Innenradius 0,65 bis 0,85, vorzugsweise 0,75xd, und einem zur Längsachse 9 parallelen, geraden Teilstück 11 sowie aus einem anschließenden, rechtwinklig zur Längsachse 9 und zur Stegachse 12 des Steges 6 (Fig. 2 und 3) abgebogenen (in Fig. 1 nach unten zeigenden) geraden Endstück 13, 14 besteht, welches jeweils außen an dem Schenkel 8 anliegt und somit die Oese 15 schließt. Die Endstücke 13, 14 sind wahlweise mit kurzen, stumpfen Enden mit einer Gesamtlänge von 2,5 bis 2,9, vorzugsweise von 2,7xd, die damit in die Ebene des Mittelteils 6, 7, 8 hineinragt, oder mit angeformten Spitzen 16 mit einer Gesamtlänge über alles von 7,5 bis 7,9, vorzugsweise 7,7xd, versehen.

Die Endstücke 14 mit Spitzen 16 sind unter einem Winkel δ von 25 bis 35°, vorzugsweise 30°, schräg abgeschnitten und bilden in Förderrichtung F gesehen vorneliegende Spitzen 16, die die abgeschnittenen Schneidgut-Scheiben auf- und mitnehmen.

Die Spitzen 16 können auch in konischer Form sowie ein- oder mehrflächig angeprägt sein.

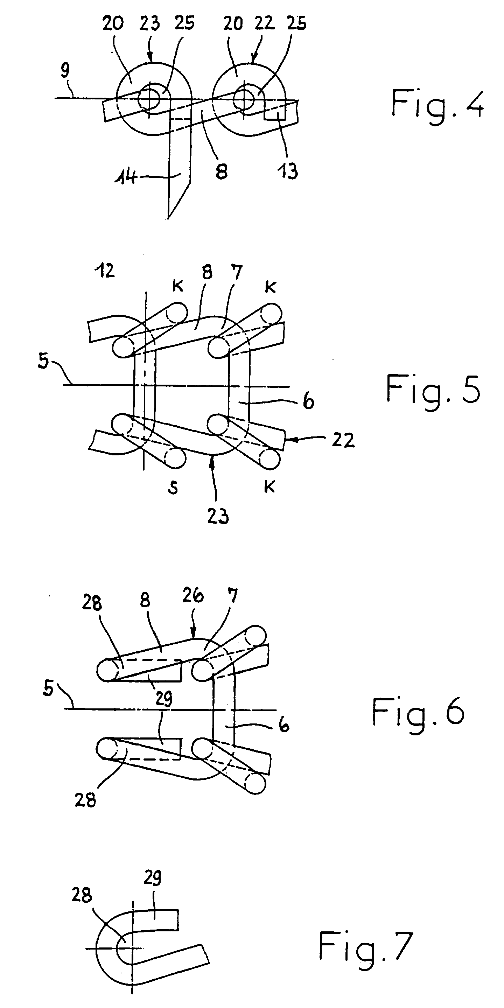

Fig. 4 und 5 zeigen als eine Ausführungsvariante Kettenglieder 22 und 23, bei denen sich an das U-förmige Mittelteil 6, 7, 8 jeweils eine Oese 25 anschließt, die aus einem dreiviertelkreisförmigen Bogenstück 20 mit einem Innenradius von 0,65 bis 0,8xd, vorzugsweise 0,75d, sowie je einem anschließenden, rechtwinklig zur Längsachse 9 und zur Stegachse 12 (oder rechtwinklig zur Förderbandkettenebene) angeordneten, geraden Endstück 13 und/oder 14 besteht, wobei letzteres jeweils außen an dem geraden Schenkel 8 anliegt und die Oese 25 schließt.

Fig. 6 zeigt in der Seitenansicht eine vorteilhafte Ausgestaltung eines Ketten-Endgliedes 26 der erfindungsgemäßen Bandkette 1, bei dem sich an die geraden Schenkel 8 des Mittelteils 6, 7, 8 je eine offene Oese 28 mit einem rückkragenden Abschnitt 29 anschließt, dessen Länge über alles 3,5 bis 4,2xd, vorzugsweise 4xd beträgt (Fig. 7). In die Oesen 28 des Endgliedes 26 wird das Anfangsglied der Bandkette 1 eingehängt und so die geschlossene Form hergestellt.

Die Anordnung gemäß Fig. 1 und 2 zeigen eine besonders vorteilhafte, durch praktische Versuche optimierte, universell anwendbare Anordnung von kurzen Endstücken 13 und langen Endstücken 14 mit Spitzen 16, wobei jeweils zwei Kettenglieder 2 und 4 mit wechselständig, d.h. gemäß Fig. 2 einmal oben und einmal unten angeordneten, langen Endstücken 14 mit Spitzen 16 und ein Kettenglied 3 mit zwei dazwischen angeordneten, kurzen Endstücken 13 gekoppelt ist.

Für spezielle Anwendungsfälle wurden jedoch auch andere Anordnungen erprobt, wobei die Kettenglieder 2 und 4 z.B. je zwei lange Endstücke 14 mit Spitzen 16 oder sämtliche Kettenglieder 2, 3, 4 ff. ausschließlich lange Endstücke 14 mit Spitzen tragen. Auch sind als weiteres Beispiel Anordnungen möglich, wo zwischen zwei Kettenglieder 2 und 4 mindestens zwei Kettenglieder 3 angeordnet sind. Je nach Anwendungsfall sind in Anpassung an die jeweiligen Eigenschaften des Schneidgutes auch noch andere Anordnungs-Kombinationen denkbar.

Die erfindungsgemäße Ausbildung und Anordnung der Kettenglieder der Förder-Bandkette, die in langwierigen Versuchsreihen ermittelt wurde, ergibt gegenüber dem bekannten Stand der Technik folgende wesentliche Vorteile.

Durch den wechselseitigen Stand der Spitzen am Rand der Bandketten ergibt sich eine flächigere und damit gleichmäßigere und schonendere Aufnahme der Schneidgut-Scheiben auf mehr Spitzenreihen, was insbesondere auch für Schneidgut mit flachrechteckigem Querschnitt, wie z.B. Bauchspeck, günstig ist.

Beim Abheben derselben von den Mitnehmer-Stiften durch den Abschläger wird die Verformung der Scheiben in der Umgebung der Stifte auf ein Minimum reduziert, da durch die statt in der Mitte am Außenrand der Bandkette angeordneten Stifte der Abschläger in unmittelbarer Nähe zu diesem angreifen kann.

Ein wesentlicher Rationalisierungseffekt ergibt sich dadurch, daß durch die wechselständige Stift-Anordnung an der Fördervorrichtung ein bis zwei von bislang acht Bandketten eingespart werden können.

Entsprechend werden auch weniger Umlenkrollen und Spannfedern zum Spannen der Bandketten benötigt, ebenso weniger Schlägerstäbe am Abschläger.

Zudem wird das Schneidgut insgesamt durch die geringere Anzahl von Stiften weniger perforiert.

Die gesamte Förder-Bandkette wird vorteilhafterweise in aufeinanderfolgenden Teil-Arbeitsgängen in einem einzigen sog. Folgewerkzeug hergestellt, d.h. sämtliche einzelnen Kettenglieder einschließlich des Endgliedes werden in einem Zuge geformt und aneinandergereiht, so daß die komplett fertige Bandkette in gewünschter Länge aus dem Werkzeug bzw. der Maschine kommt.

## Patentansprüche

1. Förder-Bandkette (1) für eine Fördereinrichtung einer Scheibenablegevorrichtung an einer Aufschnitt-Schneidemaschine für Wurst, Fleisch, Käse oder dgl. mit Kettengliedern (2; 3; 4), welche samt senkrecht von der Bandkette (1) abstehenden, Schneidgut-Scheiben aufnehmenden Spitzen (16) einstückig aus Draht geformt sind, wobei die Kettenglieder (2; 3; 4) jeweils ein symmetrisch zur Kettenlängsrichtung ausgebildetes U-förmiges Mittelteil (6; 7; 8) mit einem Steg (6) und zwei sich auf gegenüberliegenden Seiten des Steges daran anschließenden Schenkeln (8), welchletztere an ihren freien Enden angeformte Oesen (15) tragen, aufweisen, dadurch gekennzeichnet, daß die Schenkel (8) nach innen konisch angestellt sind, daß die Oesen (15) unmittelbar in ein im wesentlichen rechtwinklig zur Kettenbandebene abgewinkeltes Endstück (13, 14) münden, welches am jeweiligen Schenkel (8) anliegt und die Oese (15) schließt, und daß eine vorgegebene Anzahl von Kettengliedern (2, 3, 4, 22, 23), welche in regelmäßigen Abständen entlang der Bandkette (1) angeordnet sind, an mindestens einem Endstück (14) eine sich von dem Endstück im wesentlichen gerade fortsetzende Spitze (16) tragen.

2. Förder-Bandkette nach Anspruch 1, dadurch gekennzeichnet, daß der Steg (6) und/oder die Schenkel (8) im wesentlichen gerade ausgebildet sind.

3. Förder-Bandkette nach Anspruch 1 oder 2, dadurch gekennzeichnet, daß die Endstücke (13, 14) außen an den Schenkeln (8) anliegen.

4. Förder-Bandkette nach einem der Ansprüche 1 bis 3, dadurch gekennzeichnet, daß die Endstücke (13, 14) im wesentlichen gerade sind.

5. Förder-Bandkette nach einem der Ansprüche 1 bis 4, dadurch gekennzeichnet, daß die Oesen (15) ein teilkreisförmiges, insbesondere halbkreisförmiges, Bogenstück und ein zur Kettenlängsachse paralleles, im wesentlichen gerades, Teilstück umfassen.

6. Förder-Bandkette nach Anspruch 1, dadurch gekennzeichnet, daß sich bei den Kettengliedern (22, 23) an die Schenkel (8) des U-förmigen Mittelteils (6, 7, 8) jeweils eine Oese (25) anschließt, die aus einem dreiviertelkreisförmigen Bogenstück (20) sowie je einem anschließenden, rechtwinklig zur Kettenbandebene angeordneten, geraden Endstück (13, 14) besteht, wobei letzteres jeweils außen an dem geraden Schenkel (8) anliegt und die Oese (25) schließt.

7. Förder-Bandkette nach einem der Ansprüche 1 bis 6, dadurch gekennzeichnet, daß bei den Kettengliedern (2, 3, 4, 22, 23) die lichte Weite zwischen den Schenkeln (8) des U-förmigen Mittelteils (6, 7, 8) 2,3 bis 2,8x Drahtdurchmesser d beträgt und der Innenradius des Bogenstücks (7) 0,6 bis 0,8d ist, die teilkreisförmigen Bogenstücke (10; 20) einen Innenradius von 0,65 bis 0,85xd aufweisen sowie die Gesamtlänge der Endstücke (13) 2,5 bis 2,9xd, die der Endstücke (14) einschließlich der Spitzen (16) 7,5 bis 7,9xd über alles beträgt.

8. Förder-Bandkette nach einem der Ansprüche 1 bis 7, dadurch gekennzeichnet, daß bei den Kettengliedern (2, 3, 4, 22, 23) die lichte Weite zwischen den Schenkeln (8) des U-förmigen Mittelteils (6, 7, 8) 2,5x Drahtdurchmesser d beträgt und das Bogenstück (7) sowie die teilkreisförmigen Bogenstücke (10; 20) einen Innenradius von 0,75xd aufweisen sowie die Gesamtlänge der Endstücke (13) 2,7xd, die der Endstücke einschließlich der Spitzen (16) 7,7xd über alles beträgt.

9. Förder-Bandkette nach einem der Ansprüche 1 bis 8, dadurch gekennzeichnet, daß die Spitzen (16) durch einen Schrägschnitt unter einem Winkel δ von 25 bis 35° gebildet werden.

10. Förder-Bandkette nach Anspruch 9, dadurch gekennzeichnet, daß der Winkel δ 30° beträgt.

11. Förder-Bandkette nach einem der Ansprüche 1 bis 10, dadurch gekennzeichnet, daß die Spitzen (16) in konischer Form sowie ein- oder mehrflächig angeprägt sind.

12. Förder-Bandkette nach den Ansprüchen 1 bis 11, dadurch gekennzeichnet, daß jeweils zwei Kettenglieder (2 und 4) mit wechselständig angeordneten Endstücken (14) mit Spitzen (16) und ein Kettenglied (3) mit Endstücken (13) ohne Spitzen aneinander gekoppelt sind.

13. Förder-Bandkette nach den Ansprüchen 1 bis 11, dadurch gekennzeichnet, daß Kettenglieder vorhanden sind, welche an beiden Endstücken Spitzen (16) tragen und daß diese Kettenglieder durch mindestens ein Kettenglied ohne Spitzen miteinander verbunden sind.

14. Förder-Bandkette nach den Ansprüchen 1 bis 11, dadurch gekennzeichnet, daß sämtliche Kettenglieder (2, 3, 4, 22, 23) wechselständig Endstücke (14) mit Spitzen (16) aufweisen.

15. Förder-Bandkette nach den Ansprüchen 1 bis 11, dadurch gekennzeichnet, daß sämtliche Kettenglieder (2, 3, 4, 22, 23) mit Endstücken (14) mit Spitzen (16) ausgestattet sind.

16. Förder-Bandkette nach den Ansprüchen 1 bis 15, dadurch gekennzeichnet, daß die Bandkette ein Ketten-Endglied (26) umfaßt, welches aus dem U-förmigen Mittelteil (6, 7, 8) und sich daran anschließende Schenkel (8) mit je einer offenen Oese (28) und mit einem rückkragenden Abschnitt (29) besteht, dessen Länge über alles 3,5 bis 4,2xd beträgt.

17. Förder-Bandkette nach Anspruch 16, dadurch gekennzeichnet, daß der rückkragende Abschnitt (29) der offenen Oese (28) eine Länge über alles von 4,0xd aufweist.

18. Förder-Bandkette nach einem der Ansprüche 16 oder 17, dadurch gekennzeichnet, daß die gesamte Förder-Bandkette (1) in einem unterteilten Arbeitsgang bzw. in aufeinanderfolgenden Teil-Arbeitsgängen in einem einzigen Folgewerkzeug komplett, also mit sämtlichen Kettengliedern (2, 3, 4 ff) sowie dem Endglied (26) aneinanderhängend gefertigt ist.

19. Aufschnittschneidemaschine für Wurst, Fleisch, Käse oder dgl., mit einer Scheibenablegevorrichtung, welche eine Fördervorrichtung mit einer Förder-Bandkette umfaßt, dadurch gekennzeichnet, daß die Förder-Bandkette gemäß einem oder mehreren der voranstehenden Ansprüche ausgebildet ist.

## Claims

1. A conveyor chain (1) for a conveying device of a slice depositing device on a slicing machine for sausage, meat, cheese or the like, having chain links (2; 3; 4), which are formed in one piece from wire together with tips (16) projecting vertically from the belt chain (1) and receiving slices of cut product, wherein the chain links (2; 3; 4) in each case have a U-shaped central part (6; 7; 8) constructed symmetrically to the longitudinal direction of the chain and having a crossbar (6) and two legs (8) adjoining said crossbar on opposite sides thereof,- these legs bearing loops (15) integrally formed at their free ends,
characterised in that the legs (8) are directed conically inwards,
in that the loops (15) lead directly into an end piece (13, 14) bent substantially at right angle to the plane of the chain belt, which abuts the respective leg (8) and closes the-loop (15),
and in that a predetermined number of chain links (2, 3, 4, 22, 23), which are disposed at regular intervals along the belt chain (1), bear on at least one end piece (14) a tip (16) continuing from the end piece substantially in a straight line.

2. A conveyor chain according to Claim 1,
characterised in that the crossbar (6) and/or the legs (8) have a substantially straight construction.

3. A conveyor chain according to Claim 1 or 2,
characterised in that the end pieces (13, 14) externally abut the legs (8).

4. A conveyor chain according to one of Claims 1 to 3,
**characterised in that** the end pieces (13, 14) are substantially straight.

5. A conveyor chain according to one of Claims 1 to 4,
**characterised in that** the loops (15) comprise a curved part in the shape of a partial circle, in particular a semi-circle, and a substantially straight part parallel to the longitudinal axis of the chain.

6. A conveyor chain according to Claim 1,
**characterised in that** in the case of chain links (22, 23) in each case a loop (25) adjoins the legs (8) of the U-shaped central part (6, 7, 8), said loop consisting of a curved part (20) in the shape of three-quarters of a circle as well as an adjoining straight end piece (13, 14) disposed at right angles to the plane of the chain belt, said end piece in each case externally abutting the straight leg (8) and closing the loop (25).

7. A conveyor chain according to one of Claims 1 to 6,
**characterised in that** in the case of the chain links (2, 3, 4, 22, 23) the inside width between the legs (8) of the U-shaped central part (6, 7, 8) is 2.3 to 2.8x the wire diameter d and the internal radius of the curved part (7) is 0.6 to 0.8d, the curved parts (10; 20) in the shape of a partial circle have an internal radius of 0.65 to 0.85 xd and also the total length of the end pieces (13) is 2.5 to 2.9xd, that of the end pieces (14) including the tips (16) is 7.5 to 7.9xd overall.

8. A conveyor chain according to one of Claims 1 to 7,
**characterised in that** in the case of the chain links (2, 3, 4, 22, 23) the inside width between the legs (8) of the U-shaped central part (6, 7, 8) is 2.5x the wire diameter d and the curved part (7) and also the curved parts (10; 20) in the shape of a partial circle have an internal radius of 0.75xd and also the total length of the end pieces (13) is 2.7xd, that of the end pieces including the tips (16) is 7.7xd overall.

9. A conveyor chain according to one of Claims 1 to 8,
**characterised in that** the tips (16) are formed by a bevel cut at an angle 6 of 25 to 35°.

10. A conveyor chain according to Claim 9,
**characterised in that** the angle δ is 30°.

11. A conveyor chain according to one of Claims 1 to 10,
**characterised in that** the tips (16) are stamped in a conical shape as well as with one or more surfaces.

12. A conveyor chain according to Claims 1 to 11,
**characterised in that** in each case two chain links (2 and 4) having alternately disposed end pieces (14) with tips (16) and a chain link (3) having end pieces (13) without tips are coupled to one another.

13. A conveyor chain according to Claims 1 to 11,
**characterised in that** chain links bearing tips (16) on both end pieces are provided,
and in that these chain links are connected to one another by at least one chain link without tips.

14. A conveyor chain according to Claims 1 to 11,
**characterised in that** all the chain links (2, 3, 4, 22, 23) alternately have end pieces (14) with tips (16).

15. A conveyor chain according to Claims 1 to 11,
**characterised in that** all the chain links (2, 3, 4, 22, 23) are equipped with end pieces (14) having tips (16).

16. A conveyor chain according to Claims 1 to 15,
**characterised in that** the belt chain comprises a chain end link (26) which consists of the U-shaped central part (6, 7, 8) and legs (8) adjoining said part each having an open loop (28) and having a returning section (29), the length of which overall is 3.5 to 4.2xd.

17. A conveyor chain according to Claim 16,
**characterised in that** the returning section (29) of the open loop (28) has a length overall-of 4.0xd.

18. A conveyor chain according to one of Claims 16 or 17,
**characterised in that** the entire conveyor chain (1) is produced completely, i.e. with all the link chains (2, 3, 4, et seq.) and also the end link (26) attached to one another, in one sub-divided operating step or in consecutive partial operating steps in a single follow-on tool.

19. A slicing machine for sausage, meat, cheese or the like, having a slice depositing device comprising a conveyor device having a conveyor chain,
**characterised in that** the conveyor chain is constructed in accordance with one or several of the preceding -claims.

## Revendications

1. Chaîne de transport (1) pour un transporteur d'un dispositif de dépôt de tranches d'une machine à découper des saucisses, de la viande, du fromage ou des matières analogues, comprenant des éléments de chaîne (2, 3, 4), qui sont façonnés d'une pièce à partir d'un fil avec des pointes (16) qui font saillie à partir de la chaîne (1) et reçoivent des tranches de matière découpée, les éléments de chaîne (2, 3, 4) présentant chacun une partie centrale (6, 7, 8) en forme de U, réalisée de manière symétrique par rapport à la direction longitudinale de la chaîne et comportant une âme (6) et deux branches (8) qui se rattachent à l'âme aux côtés opposés de celle-ci et qui portent un oeillet (15) agencé à leur extrémité libre, caractérisée en ce que les branches (8) sont mises en place de manière conique vers l'intérieur, en ce que les oeillets (15) se terminent directement en un morceau terminal (13, 14) qui est replié sensiblement perpendiculairement au plan de la chaîne, est en appui sur la branche (8) respective et ferme l'oeillet (15), et en ce qu'un nombre prédéterminé d'éléments de chaîne (2, 3, 4, 22, 23), qui sont agencés à distances régulières le long de la chaîne (1), portent sur au moins un morceau d'extrémité (14) une pointe (16) prolongeant de manière sensiblement rectiligne le morceau d'extrémité.

2. Chaîne de transport suivant la revendication 1, caractérisée en ce que l'âme (6) et/ou les branches (8) sont réalisées sous une forme sensiblement droite.

3. Chaîne de transport suivant l'une des revendications 1 et 2, caractérisée en ce que les morceaux terminaux (13, 14) sont en appui à l'extérieur sur les branches (8).

4. Chaîne de transport suivant l'une des revendications 1 à 3, caractérisée en ce que les morceaux terminaux (13, 14) sont sensiblement droits.

5. Chaîne de transport suivant l'une des revendications 1 à 4, caractérisée en ce que les oeillets (15) comportent un morceau coudé de forme partiellement circulaire, en particulier semi-circulaire, et un morceau partiel, sensiblement droit, parallèle à l'axe longitudinal de la chaîne.

6. Chaîne de transport suivant la revendication 1, caractérisée en ce que, dans les éléments de chaîne (22, 23), il se rattache à chacune des branches (8) de la partie centrale en forme de U (6, 7, 8) un oeillet (25) qui est constitué d'un morceau coudé (20) en forme de trois quarts de cercle ainsi que d'un morceau terminal droit (13, 14) ultérieur qui est agencé perpendiculairement au plan de la chaîne, ce morceau terminal étant en appui à l'extérieur sur la branche droite (8) et fermant l'oeillet (25).

7. Chaîne de transport suivant l'une des revendications 1 à 6, caractérisée en ce que, dans les éléments de chaîne (2, 3, 4, 22, 23), la largeur libre entre les branches (8) de la partie centrale en forme de U (6, 7, 8) est de 2,3 à 2,8 x le diamètre de fil d et le rayon interne du morceau coudé (7) de 0,6 à 0,8 x d, en ce que les morceaux coudés en forme de cercle partiel (10, 20) présentent un rayon interne de 0,65 à 0,85 x d, et en ce que la longueur totale des morceaux terminaux (13) est par-dessus tout de 2,5 à 2,9 x d, et celle des morceaux terminaux (14) y compris les pointes (16) de 7,5 à 7,9 x d.

8. Chaîne de transport suivant l'une des revendications 1 à 7, caractérisée en ce que, dans les éléments de chaîne (2, 3, 4, 22, 23), la largeur libre entre les branches (8) de la partie centrale en forme de U (6, 7, 8) est de 2,5 x le diamètre de fil d et en ce que le morceau coudé (7) ainsi que les morceaux coudés de forme partiellement circulaire (10, 20) présentent un rayon interne de 0,75 x d et en ce que la longueur totale des morceaux terminaux (13) est par-dessus tout de 2,7 x d et celle des morceaux terminaux y compris les pointes (16) de 7,7 x d.

9. Chaîne de transport suivant l'une des revendications 1 à 8, caractérisée en ce que les pointes (16) sont formées par une section inclinée sous un angle 6 de 25 à 35°.

10. Chaîne de transport suivant la revendication 9, caractérisée en ce que l'angle δ est de 30°.

11. Chaîne de transport suivant l'une des revendications 1 à 10, caractérisée en ce que les pointes (16) sont matricée sous une forme conique ainsi que sous une forme à une ou plusieurs facettes.

12. Chaîne de transport suivant l'une des revendications 1 à 11, caractérisée en ce que chaque fois deux éléments de chaîne (2 et 4) dotés de morceaux terminaux (14) à pointes (16) agencés en quinconce et un élément de chaîne (3) à morceaux d'extrémité (13) sans pointe sont couplés l'un à l'autre.

13. Chaîne de transport suivant l'une des revendications 1 à 11, caractérisée en ce qu'il y a des éléments de chaîne qui portent des pointes (16) aux deux morceaux terminaux et en ce que ces éléments de chaîne sont mutuellement reliés par au moins un élément de chaîne sans pointe.

14. Chaîne de transport suivant l'une des revendications 1 à 11, caractérisée en ce que l'ensemble des éléments de chaîne (2, 3, 4, 22, 23) présentent en quinconce des morceaux terminaux (14) à pointe (16).

15. Chaîne de transport suivant l'une des revendications 1 à 11, caractérisée en ce que l'ensemble des éléments de chaîne (2, 3, 4, 22, 23) sont équipés de morceaux terminaux (14) à pointes (16).

16. Chaîne de transport suivant l'une des revendications 1 à 15, caractérisée en ce que la chaîne comporte un élément terminal de chaîne (26) qui est constitué de la partie centrale en forme de U (6, 7, 8) et des branches (8) qui s'y rattachent avec chaque fois un oeillet ouvert (28) et une section (29) retournant vers l'arrière, dont la longueur est par-dessus tout de 3,5 à 4,2 x d.

17. Chaîne de transport suivant la revendication 16, caractérisée en ce que la section retournant en arrière (29) de l'oeillet ouvert (28) présente une longueur par-dessus tout de 4,0 x d.

18. Chaîne de transport suivant l'une des revendications 16 et 17, caractérisée en ce que la totalité de la chaîne de transport (1) est fabriquée dans une opération subdivisée ou dans des opérations partielles successives dans un seul outil progressif, et cela de manière complète, donc avec l'ensemble des éléments de chaîne (2, 3, 4, et suivants) ainsi que l'élément terminal (26) suspendus l'un à l'autre.

19. Machine à découper de la saucisse, de la viande, du fromage ou une matière analogue, comprenant un dispositif de dépôt de tranches qui comporte un transporteur muni d'une chaîne de transport, caractérisée en ce que la chaîne de transport est réalisée conformément à une ou plusieurs des revendications précédentes.
